# EUROPÄISCHE PATENTSCHRIFT

(11) **EP 0 444 468 B1**
(45) Veröffentlichungstag und Bekanntmachung des Hinweises auf die Patenterteilung: **26.10.1994**
(21) Anmeldenummer: 91101947.9
(22) Anmeldetag: 12.02.1991
(51) Int. Cl.: C08L 25/02, C08L 51/04

(54) **Thermoplastische Formmasse mit verbesserter Zähigkeit**
Thermoplastic moulding composition with improved toughness
Masse à mouler thermoplastique à ténacité améliorée

(30) Priorität: 20.02.1990 DE 4005210
(43) Veröffentlichungstag der Anmeldung: 04.09.1991
(73) Patentinhaber: BASF Aktiengesellschaft, 67063 Ludwigshafen (DE)
(72) Erfinder: Seitz, Friedrich, Dr., W-6701 Friedelsheim (DE); Ruppmich, Karl, W-6700 Ludwigshafen (DE)

(56) Entgegenhaltungen:
- EP-A- 0 099 532
- DE-A- 3 134 103
- FR-A- 2 176 782
- FR-A- 2 320 966
- US-A- 3 041 307

## Beschreibung

Die Erfindung betrifft eine thermoplastische Acrylat-Styrol-Acrylnitril-(ASA-)-Formmasse mit hoher Zähigkeit.

Die Herstellung von witterungs- und alterungsbeständigen ASA-Polymerisaten ist u.a. in US 3 055 859 und GB 1 124 911 (DE 12 60 135) beschrieben. Dabei wird zunächst das als Pfropfgrundlage dienende kautschukelastische Polymerisat durch Emulsionspolymerisation von Acrylsäureestern mit 4 bis 8 Kohlenstoffatomen hergestellt. Der entstandene Latex hat im allgemeinen einen mittleren Teilchendurchmesser von unter 100 nm; auf diesen wird ein Gemisch von Styrol und Acrylnitril aufgepfropft, wobei die Pfropfmischpolymerisation ebenfalls vorzugsweise in Emulsion ausgeführt wird. Zur Erzielung von ASA-Polymerisaten mit guten mechanischen Eigenschaften hat es sich als notwendig erwiesen, daß der als Pfropfgrundlage dienende Polyacrylsäureester-Kautschuk vernetzt ist, d.h. daß bei seiner Herstellung die Acrylsäureester mit geringen Mengen von bifunktionellen, vernetzend wirkenden Monomeren copolymerisiert werden.

Eine Weiterentwicklung des aus DE 12 60 135 bekannten Verfahrens ist in US 3 691 260 (DE 19 11 882) beschrieben. Nach den Angaben in dieser Druckschrift wird als Pfropfgrundlage bei der Pfropfpolymerisation ein "großteiliger" Latex eines vernetzten Acrylsäureester-Polymerisats mit einem mittleren Teilchendurchmesser zwischen 150 und 800 nm und einer engen Teilchengrößenverteilung eingesetzt. Gegenüber den Produkten, die unter Verwendung kleinteiliger Acrylsäureester-Polymerisat-Latices hergestellt worden sind, zeichnen sich die ASA-Polymerisate, bei deren Herstellung großteilige Acrylsäureester-Polymerisat-Latices eingesetzt worden sind, durch verbesserte Kerbschlagzähigkeit, größere Härte und verminderte Schrumpfung aus. Im Gegensatz zu ASA-Polymerisaten mit kleinteiligen Pfropfmischpolymerisaten lassen sich die ASA-Polymerisate mit großteiligen Pfropfmischpolymerisate nur schlecht einfärben. Man erhält nur stumpfe Farbtönungen mit pastellartigem Charakter, nicht jedoch die erwünschten, brillanten, leuchtenden Farbeinstellungen.

Eine Weiterentwicklung des aus DE 19 11 882 bekannten Verfahrens ist in US 4 634 734 (DE 31 49 358) beschrieben. Hierbei wird ein vernetzter Alkylacrylat-Kautschuk mit einer mittleren Teilchengröße von 200 bis 500 nm als Pfropfgrundlage verwendet. Die Pfropfung erfolgt in zwei Stufen, wobei in der ersten Stufe nur vinylaromatische Monomere, in der zweiten ein Gemisch aus einem vinylaromatischen Monomeren und einem ethylenisch ungesättigten Monomeren aufgepfropft werden. Der Hauptvorteil dieses Verfahrens ist es, daß die mit diesen Pfropfmischpolymerisaten hergestellten Formmassen trotz der relativ hohen mittleren Teilchengröße des Pfropfmischpolymerisats eine sehr gute Einfärbbarkeit besitzen.

In der US 4 224 419 (DE 28 26 925) werden ASA-Polymerisate mit einer hohen Schlagzähigkeit und einem guten Einfärbeverhalten beschrieben. Diese Eigenschaften werden durch Abmischen zweier Pfropfkautschuke mit unterschiedlichen Teilchengrößen erreicht.

Aus der DE-A-31 34 103 ist bekannt, daß eine Verbesserung der Witterungsbeständigkeit von ASA-Polymeren dadurch erzielt werden kann, daß der (kautschukelastische) Acrylester-Kern der betreffenden Pfropfcopolymerisate mit einem höheren Anteil an bestimmten Vernetzern, nämlich Allylestern aliphatischer Dicarbonsäuren copolymerisiert wird.

Trotz der genannten Verbesserungen stellt der Oberflächenglanz der mit großteiligen Pfropfmischpolymerisaten hergestellten Formkörper, vor allem unter ungünstigen Verarbeitungsbedingungen, nach wie vor ein Problem dar. Die Herstellung großteiliger Pfropfgrundlagen ist zudem aufwendiger und kostenintensiver als die kleinteiliger Pfropfgrundlagen. Das Abmischen zweier Pfropfkautschuke erfordert eine komplizierte Logistik und zusätzliche Verfahrensschritte. Generell ist für viele Anwendungen eine weitere Erhöhung der Zähigkeit von Interesse.

Es bestand daher die Aufgabe, Produkte auf Basis von ASA-Polymerisaten zu schaffen, welche neben den günstigen Eigenschaften der bekannten Formmassen, wie Witterungs- und Alterungsbeständigkeit, Steifigkeit und Festigkeit eine deutlich verbesserte Schlagzähigkeit aufweisen und leicht herzustellen sind. Dies gelingt erfindungsgemäß durch den Einbau von Alkylacrylaten mit 7 bis 20 Kohlenstoffatomen im Alkylrest in die Pfropfhülle der Pfropfmischpolymerisate.

Der Einbau von Alkylacrylaten in die Pfropfhülle von Dienkautschuken ist bereits in US 4 308 355 und US 4 351 923 beschrieben. Es war aber nicht zu erwarten, daß der Einbau von Alkylacrylaten in die Pfropfhülle von Alkylacrylat-Kautschuken, die eine völlig andere Struktur und Zusammensetzung als Dien-Kautschuke aufweisen, eine Verbesserung der Schlagzähigkeit bewirken würde, zumal aus der EP 270 948 bekannt ist, daß der Einbau relativ kurzkettiger Alkylacrylate (mit bis zu 6 Kohlenstoffatomen im Alkylrest) in die Pfropfhülle von Pfropfmischpolymerisaten zwar die Verarbeitung der Pfropfmischpolymerisate im Hinblick auf Filtrierbarkeit, Entwässerung und Trocknung erleichtert und Pulver mit verbesserten Eigenschaften wie Rieselfähigkeit, Korngrößenverteilung, Schüttdichte und Lagerbeständigkeit ergibt, aber nur eine geringe Verbesserung der Zähigkeit gegenüber Pfropfmischpolymerisaten, die ohne Verwendung von Alkylacrylaten hergestellt wurden, bewirkt.

Unmittelbarer Erfindungsgegenstand ist daher eine thermoplastische Formmasse, die (bezogen auf die Summe aus A + B + C) enthält:
A: 1 bis 30 Gew.-%, mindestens eines elastomeren Polymerisats A mit einer mittleren Teilchengröße von 30 bis 1000 nm aus - bezogen auf A -
   A1: 50 bis 99,9 Gew.-% mindestens eines Alkylacrylats A1 mit 1 bis 8 Kohlenstoffatomen im Alkylrest,
   A2: 0,1 bis 5 Gew.-% mindestens eines polyfunktionellen, vernetzend wirkenden Monomeren A2
   und
   A3: bis zu 50 Gew.-% mindestens eines monoethylenisch ungesättigten Monomeren A3,
   als Pfropfgrundlage
B: 5 bis 40 Gew.-% einer auf das elastomere Polymerisat A aufgepfropften Hülle B aus - bezogen auf B -
   B1: 30 bis 90 Gew.-% mindestens eines vinylaromatischen Monomeren B1
   B2: 5 bis 40 Gew.-% mindestens eines polaren, copolymerisierbaren, ethylenisch ungesättigten Monomeren B2
   und
   B3: 5 bis 30 Gew.-% mindestens eines Alkylacrylats B3 mit 7 bis 20 Kohlenstoffatomen im Alkylrest
   und
C. 30 bis 94 Gew.-% eines Copolymerisats C, aus
   C1: mindestens einem vinylaromatischen Monomeren C1
   und
   C2: mindestens einem polaren, copolymerisierbaren, ethylenisch ungesättigen Monomeren C2.

Über die Zusammensetzung der Formmasse, ihre Bestandteile und ihre Herstellung ist im einzelnen das Folgende zu sagen:

### Pfropfgrundlage A:

Die elastomeren Polymerisate aus einer Pfropfgrundlage (Kautschuk) A und einer Pfropfhülle B werden in an sich bekannter Weise erhalten. Als Kautschuk A dient vernetztes Acrylsäureester-Polymerisat mit einer Glasübergangstemperatur unter 0°C, bevorzugt unter -20°C, besonders bevorzugt unter -30°C (die Glasübergangstemperatur wird z.B. nach der DSC-Methode ermittelt; K. H. Illers, Makromol. Chemie 127 (1969) S. 1). Als Monomere A1 für die Herstellung der Kautschuke kommen Acrylsäurealkylester mit 1 bis 8 Kohlenstoffatomen, mindestens teilweise solche mit 4 bis 8 Kohlenstoffatomen im Alkylrest in Betracht. Als geeignet seien besonders Acrylsäure-n-butylester und Acrylsäureethylhexylester genannt. Die Acrylsäureester können jeweils allein oder auch in Mischung miteinander eingesetzt werden.

Zur Erzielung guter mechanischer Eigenschaften hat es sich als notwendig erwiesen, daß das als Pfropfgrundlage verwendete Acrylsäureester-Polymerisat vernetzt ist. Hierzu wird die Polymerisation der Acrylsäureester in Gegenwart von 0,1 bis 5 Gew.-%, vorzugsweise von 1 bis 4 Gew.-%, bezogen auf das Gesamtgewicht der bei der Herstellung der Pfropfgrundlage eingesetzten Monomeren, eines copolymerisierbaren, polyfunktionellen, die Vernetzung bewirkenden Monomeren A2 durchgeführt. Es eignen sich Monomere, die mindestens zwei zur Copolymerisation befähigte ethylenische Doppelbindungen enthalten, die nicht in 1,3-Stellung konjugiert sind. Beispiele sind Divinylbenzol, Diallylmaleat, Diallylfumarat, Diallylphthalat, Allylmethacrylat, Triallylcyanurat oder Triallylisocyanurat. Als besonders günstiges Vernetzungsmonomeres hat sich der Acrylsäureester des Tricyclodecenylalkohols erwiesen (vgl. DE 12 60 135).

Im Bedarfsfalle kann das Polymerisat A auch noch bis zu 50 Gew.-%, im allgemeinen bis zu 30 Gew.-%, eines weiteren copolymerisierbaren Monomeren A3 wie Butadien, Isopren, Styrol, Acrylnitril, Methylmethacrylat und/oder Vinylmethylether enthalten.

Die Herstellung des Pfropfmischpolymerisates kann nach der in der DE 12 60 135 beschriebenen Methode erfolgen. Hierzu wird zunächst die Pfropfgrundlage A hergestellt, indem der oder die Acrylsäureester A1 und das polyfunktionelle Monomere A2, gegebenenfalls zusammen mit dem weiteren Comonomeren A3, in wäßriger Emulsion bei einer Temperatur zwischen 20 und 100°C, bevorzugt zwischen 50 und 80°C polymerisiert werden. Es können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder von Fettsäuren mit 10 bis 18 Kohlenstoffatomen. Es ist günstig, die Emulgatoren in Mengen von 0,5 bis 5 Gew.-%, insbesondere von 1 bis 2 Gew.-%, bezogen auf das Gesamtgewicht der verwendeten Monomeren einzusetzen. Im allgemeinen wird bei einem Wasser/Monomer-Verhältnis von 2 : 1 bis 0,7 : 1 gearbeitet. Als Polymerisationsinitiatoren dienen insbesondere die gebräuchlichen Persulfate, wie z.B. Kaliumperoxodisulfat; es sind jedoch auch Redoxsysteme geeignet. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-% eines Molekulargewichtsreglers, wie Mercaptane, Terpinole oder dimeres α-Methylstyrol, bei der Polymerisation verwendet werden.

Die genauen Polymerisationsbedingungen, insbesondere Art, Dosierung und Menge des Emulgators werden innerhalb der oben angegebenen Bereiche im einzelnen so bestimmt, daß der erhaltene Latex des vernetzten Acrylsäureester-Polymerisates einen d₅₀-Wert im Bereich von etwa 30 bis 1000 nm, bevorzugt im Bereich von 50 bis 800 nm besitzt.

Prinzipiell ist es auch möglich, die Pfropfgrundlage nach einem anderen Verfahren als dem der Emulsionspolymerisation herzustellen, z.B. durch Masse- oder Lösungspolymerisation, und die erhaltenen Polymerisate nachträglich zu emulgieren. Die Verfahren hierfür sind bekannt.

### Pfropfhülle B:

Zur Herstellung des Pfropfmischpolymerisates aus Kern und Pfropfhülle wird in Gegenwart des erhaltenen Latex A ein Monomerengemisch aus mindestens einem vinylaromatischen Monomeren B1 und mindestens einem copolymerisierbaren polaren Monomeren B2 im Verhältnis 90 : 10 bis 60 : 40, vorzugsweise 80 : 20 bis 65 : 35 polymerisiert. Beispiele für vinylaromatische Monomere sind Styrol, α-Methylstyrol und kernalkylierte Styrole wie p-Methylstyrol und tert.-Butylstyrol. Besonders bevorzugt werden Styrol, α-Methylstyrol und p-Methylstyrol eingesetzt. Beispiele für polare, copolymerisierbare ethylenisch ungesättigte Monomere B2) sind Acrylnitril, Methacrylsäurealkylester mit 1 bis 4 Kohlenstoffatomen im Alkylrest, Acrylsäure, Maleinsäureanhydrid, Acrylamid und/oder Vinylmethylether. Bevorzugt werden Acrylnitril, Methylmethacrylat und deren Gemische. Die Acrylate B3 enthalten 7 bis 20, vorzugsweise 8 bis 12 Kohlenstoffatome im Alkylrest, es handelt sich z.B. um Ethylhexylacrylat und Decylacrylat. Besonders bevorzugte Monomerengemische enthalten 45 bis 80 Gew.-% Styrol oder α-Methylstyrol, 10 bis 30 Gew.-% Acrylnitril und 10 bis 25 Gew.-% Ethylhexylacrylat.

Es ist vorteilhaft, die Pfropfmischpolymerisation auf das als Pfropfgrundlage dienende Polymerisat wiederum in wäßriger Emulsion durchzuführen. Sie wird zweckmäßig im gleichen System wie die Polymerisation der Pfropfgrundlage vorgenommen, wobei weiterer Emulgator und Initiator zugegeben werden kann. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so geführt, daß ein Pfropfgrad von 10 bis 45 Gew.-%, vorzugsweise von 15 bis 40 Gew.-% resultiert.

### Hartkomponente C:

Zusätzlich zu dem Pfropfmischpolymerisat aus A und B, enthalten die erfindungsgemäßen Mischungen eine Hartkomponente C aus einem oder mehreren Copolymerisaten eines vinylaromatischen Monomeren C1 und eines polaren, copolymerisierbaren, ethylenisch ungesättigten Monomeren C2, der einen Anteil von 30 bis 94 Gew.-%, bezogen auf A + B + C ausmacht. Bevorzugte vinylaromatische Monomere C1 sind Styrol und α-Methylstyrol, als ethylenisch ungesättigtes Monomeres C2 wird Acrylnitril bevorzugt. Der Anteil des ethylenisch ungesättigten Monomeren C2 soll 20 bis 40 Gew.-%, bezogen auf die Hartkomponente C, betragen.

Bei dieser - i.a. getrennt hergestellten - Hartkomponente C kann es sich z.B. um ein Styrol/Acrylnitril-Copolymerisat, ein α-Methylstyrol/Acrylnitril-Copolymerisat, ein Styrol/Maleinsäureanhydrid-Copolymerisat, ein α-Methylstyrol/Styrol/Acrylnitril-Terpolymerisat, ein Styrol/Acrylnitril/Methylmethacrylat-Terpolymerisat, ein Styrol/Acrylnitril/Maleinsäureanhydrid-Terpolymerisat, ein Styrol/Acrylnitril/Acrylsäure-Terpolymerisat oder ein α-Methylstyrol/Styrol/Acrylnitril-Terpolymerisat handeln.

Zur Herstellung der Hartkomponente C besonders bevorzugte Copolymerisate enthalten 60 bis 80 Gew.-% Styrol und/oder α-Methylstyrol und 20 bis 40 Gew.-% Acrylnitril. Diese Copolymerisate können einzeln oder auch in Mischung miteinander für die Hartkomponente eingesetzt werden.

Die Hartkomponente C kann nach herkömmlichen Methoden erhalten werden. So kann die Copolymerisation von Styrol und/oder α-Methylstyrol mit Acrylnitril in Masse, Lösung, Suspension oder wäßriger Emulsion durchgeführt werden. Die Hartkomponente C hat vorzugsweise eine Viskositätszahl von 40 bis 100, besonders bevorzugt von 50 bis 80.

Die Abmischung der Hartkomponente C mit dem Pfropfmischpolymerisat A + B zu den erfindungsgemäßen Massen kann so vorgenommen werden, daß zuerst ein Teil der Hartkomponente C mit dem Pfropfmischpolymerisat A + B abgemischt und dann erst der Rest der Hartkomponente C zugegeben wird. Die Abmischung kann aber auch in einem Schritt erfolgen.

Bevorzugt wird zur Herstellung der Formmasse eine Schmelze des harten Polymerisats C mit dem Pfropfmischpolymerisat A + B bei über 200°C intensiv vermischt.

Eine bevorzugte Formmasse weist eine elastomere Phase aus Butylacrylat und Tricyclodecenylacrylat auf, die mit einem Monomerengemisch aus 60 Gew.-% Styrol, 20 Gew.-% Acrylnitril und 20 Gew.-% Ethylhexylacrylat gepfropft ist und mit einer Styrol/Acrylnitril-Hartkomponente mit einem Acrylnitril-Anteil von 35 Gew.-% abgemischt wird.

Das Abmischen kann auf jede bekannte Weise erfolgen. Wenn die Komponenten durch Emulsionspolymerisation hergestellt worden sind, ist es z.B. möglich, die erhaltenen Polymerdispersionen miteinander zu vermischen, darauf die Polymerisate gemeinsam auszufällen und das Polymerisatgemisch gemeinsam aufzuarbeiten. Vorzugsweise geschieht jedoch das Abmischen durch gemeinsames Extrudieren, Kneten oder Verwalzen der Komponenten, wobei die Komponenten gegebenenfalls zuvor aus der bei der Polymerisation erhaltenen Lösung oder wäßrigen Dispersion isoliert worden sind. Die in wäßriger Dispersion erhaltenen Produkte der Pfropfmischpolymerisation A + B können auch nur teilweise entwässert werden und als feuchte Krümel mit der Hartkomponente C vermischt werden, wobei dann während des Vermischens die vollständige Trocknung der Pfropfmischpolymerisate erfolgt.

Die erfindungsgemäßen thermoplastischen Formmassen können als weitere Komponente Zusatzstoffe enthalten, wie sie für ASA-Polymerisate üblich und gebräuchlich sind. Als solche seien beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen, vorzugsweise in Mengen von 0,1 bis 30 Gew.-%, bezogen auf das Gesamtgewicht der thermoplastischen Formmasse, eingesetzt. Verträgliche Kunststoffe können auch einen höheren Anteil haben.

Die erfindungsgemäßen Massen lassen sich nach den für die Thermoplastverarbeitung üblichen Verfahren, wie z.B. Extrusion und Spritzgießen, zu Formkörpern, wie z.B. Fensterprofilen, Gartenmöbeln, Booten, Schildern, Lampenabdeckungen, Automobilteilen und Kinderspielzeug verarbeiten. Die erfindungsgemäßen Massen eignen sich besonders zur Herstellung von Formkörpern, bei denen eine hohe Schlagzähigkeit bei hoher Witterungs- und Alterungsbeständigkeit gefordert ist.

Die nachstehend zur Kennzeichnung verwendeten Größen wurden wie folgt bestimmt:
1. Bei der Angabe der mittleren Teilchengröße handelt es sich in allen Fällen um das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als d₅₀-Wert der integralen Masseverteilung bezeichnet wird, ist dabei als der Wert definiert, bei dem 50 Gew.-% der Teilchen einen kleineren und 50 Gew.-% der Teilchen einen größeren Durchmesser als der d₅₀-Wert aufweisen.
2. Die Kerbschlagzähigkelt in [kJ/m²] wurde nach DIN 53 453 an bei 220°C bzw. 250°C gespritzten Normkleinstäben bei 23°C gemessen. Die gefundenen Ergebnisse für die Beispiele sind in Tabelle 1 zusammengefaßt.
3. Die Viskositätszahlen in [cm³/g] wurden an einer 0,5 %igen Lösung in Methylethylketon bestimmt. Unlösliches oder Gelanteile wurden vor der Messung durch Zentrifugieren entfernt und die Einwaage entsprechend korrigiert.
   Die in den Beispielen verwendeten Mengenangaben beziehen sich, soweit nicht anders angegeben, auf das Gewicht.

### Beispiele

1. Herstellung eines Grundkautschukes (Komponente A)
   16 kg Butylacrylat und 0,4 kg Tricyclodecenylacrylat wurden in 150 kg Wasser unter Zusatz von 0,5 kg des Natriumsalzes einer C₁₂- bis C₁₈-Paraffinsulfonsäure, 0,3 kg Kaliumperoxodisulfat, 0,3 kg Natriumhydrogencarbonat und 0,15 kg Natriumpyrophosphat unter Rühren auf 60°C erwärmt. 10 Minuten nach dem Anspringen der Polymerisationsreaktion wurde innerhalb von 3 Stunden eine Mischung aus 82 kg Butylacrylat und 1,6 kg Tricyclodecenylacrylat zugegeben. Nach Beendigung der Monomerzugabe wurde die Emulsion noch eine Stunde bei 60°C gehalten. Die erhaltene Emulsion des vernetzten Butylacrylat-Polymerisats hatte einen Feststoffgehalt von 40 % und eine mittlere Teilchengröße von 76 nm.
2. Herstellung der Pfropfkautschuke
   4200 g der nach (1) erhaltenen Emulsion wurden mit 2300 g Wasser und 5,4 g Kaliumperoxidisulfat versetzt und unter Rühren auf 65°C erwärmt. Dann wurde im Laufe von 3 Stunden das in Tabelle 1 angegebene Monomerengemisch zugegeben. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.
3. Herstellung der Abmischungen
   Zur Herstellung der Abmischungen wurde als Hartkomponente ein Styrol/Acrylnitril-Copolymerisat mit einem Acrylnitril-Gehalt von 35 % und einer Viskositätszahl von 80 ml/g verwendet. Das gefällte und getrocknete Pfropfmischpolymerisat aus (2) wurde auf einem Extruder bei 260°C mit gleichen Mengen der Hartkomponente C abgemischt. Hieraus wurden durch Spritzguß Normkleinstäbe hergestellt.

Wie die Ergebnisse zeigen, wird eine erhebliche Steigerung der Kerbschlagzähigkeit gegenüber dem Standardversuch ohne Alkylacrylate in der Pfropfhülle beobachtet. Die Steigerung der Kerbschlagzähigkeit ist bei niedrigen Spritztemperaturen besonders stark ausgeprägt. Dagegen führen kurzkettige Alkylacrylate wie Butylacrylat nur zu einer geringen Verbesserung, bzw. sogar zu einer Verschlechterung der Kerbschlagzähigkeit, wie der Vergleichsversuch zeigt.

**Tabelle**

| | Komponente B¹⁾ | | | | Spritztemperatur ²⁾ | Kerbschlagzähigkeit [kJ/m²] |
|---|---|---|---|---|---|---|
| | S | AN | EHA | BA | | |
| 1 | 60 | 25 | 15 | - | 220°C | 8,9 |
| | | | | | 250°C | 11,9 |
| 2 | 65 | 20 | 15 | | 220°C | 9,9 |
| | | | | | 250°C | 10,1 |
| 3 | 60 | 20 | 20 | - | 220°C | 18,0 |
| | | | | | 250°C | 12,7 |
| 4 | 55 | 20 | 25 | - | 220°C | 13,6 |
| | | | | | 250°C | 11,7 |
| Vergleich | 60 | 25 | - | 15 | 220°C | 6,6 |
| | | | | | 250°C | 5,1 |
| Standard | 75 | 25 | - | - | 220°C | 6,2 |
| | | | | | 250°C | 8,5 |

| | | | | | | |
|---|---|---|---|---|---|---|
| ¹⁾ Zusammensetzung des zur Herstellung der Komponente B verwendeten Monomerengemisches in Gewichtsprozent | | | | | | |
| ²⁾ Massetemperatur der thermoplastischen Formmasse beim Spritzguß | | | | | | |
| S = Styrol AN = Acrylnitril EHA = Ethylhexylacrylat BA = Butylacrylat | | | | | | |

## Patentansprüche

1. Thermoplastische Formmasse, enthaltend (bezogen auf die Summe aus A + B + C)
A: 1 bis 30 Gew.-%, mindestens eines elastomeren Polymerisats A mit einer mittleren Teilchengröße von 30 bis 1000 nm aus - bezogen auf A -
A1: 50 bis 99,9 Gew.-% mindestens eines Alkylacrylats A1 mit 1 bis 8 Kohlenstoffatomen im Alkylrest,
A2: 0,1 bis 5 Gew.-% mindestens eines polyfunktionellen, vernetzend wirkenden Monomeren A2
und
A3: bis zu 50 Gew.-% mindestens eines monoethylenisch ungesättigten Monomeren A3,
als Pfropfgrundlage
B: 5 bis 40 Gew.-% einer auf das elastomere Polymerisat A aufgepfropften Hülle B aus - bezogen auf B -
B1: 30 bis 90 Gew.-% mindestens eines vinylaromatischen Monomeren B1
B2: 5 bis 40 Gew.-% mindestens eines polaren, copolymerisierbaren, ethylenisch ungesättigten Monomeren B2
und
B3: 5 bis 30 Gew.-% mindestens eines Alkylacrylats B3 mit 7 bis 20 Kohlenstoffatomen im Alkylrest
und
C: 30 bis 94 Gew.-% eines Copolymerisats C aus
C1: mindestens einem vinylaromatischen Monomeren C1
und
C2: mindestens einem polaren, copolymerisierbaren, ethylenisch ungesättigten Monomeren C2.

2. Thermoplastische Formmasse nach Anspruch 1, deren Pfropfhülle B aufgebaut ist aus
45 bis 80 Gew.-% des Monomeren B1,
10 bis 30 Gew.-% des Monomeren B2
und
10 bis 25 Gew.-% des Alkylacrylats B3.

3. Thermoplastische Formmasse nach Anspruch 1, enthaltend ein Alkylacrylat B3 mit 8 bis 12 Kohlenstoffatomen im Alkylrest.

4. Thermoplastische Formmasse nach Anspruch 1, enthaltend als Monomeres C2 Acrylnitril.

## Claims

1. A thermoplastic molding material containing (based on the sum of A + B + C)
A: from 1 to 30% by weight of one or more elastomeric polymers A having a mean particle size of from 30 to 1000 nm and comprising, based on A,
A1: from 50 to 99.9% by weight of one or more alkyl acrylates A1 having from 1 to 8 carbon atoms in the alkyl radical,
A2: from 0.1 to 5% by weight of one or more polyfunctional, crosslinking monomers A2
and
A3: up to 50% by weight of one or more monoethylenically unsaturated monomers A3,
as the grafting base,
B: from 5 to 40% by weight of a shell B grafted onto the elastomeric polymer A and comprising, based on B,
B1: from 30 to 90% by weight of one or more vinyl-aromatic monomers B1,
B2: from 5 to 40% by weight of one or more polar, copolymerizable, ethylenically unsaturated monomers B2,
and
B3: from 5 to 30% by weight of one or more alkyl acrylates B3 having from 7 to 20 carbon atoms in the alkyl radical,
and
C: from 30 to 94% by weight of a copolymer C comprising
C1: one or more vinyl-aromatic monomers C1
and
C2: one or more polar, copolymerizable, ethylenically unsaturated monomers C2.

2. A thermoplastic molding material as claimed in claim 1, whose graft shell B comprises
from 45 to 80% by weight of monomer B1,
from 10 to 30% by weight of monomer B2
and
from 10 to 25% by weight of alkyl acrylate B3.

3. A thermoplastic molding material as claimed in claim 1, containing an alkyl acrylate B3 having from 8 to 12 carbon atoms in the alkyl radical.

4. A thermoplastic molding material as claimed in claim 1, containing acrylonitrile as monomer C2.

## Revendications

1. Masse à mouler thermoplastique, comprenant (par rapport à la somme de A + B + C)
A : 1 à 30% en poids d'au moins un polymère élastomère A avec une granulométrie moyenne de 30 à 1.000 nm, composé de (par rapport à A)
A1 : 50 à 99,9% en poids d'au moins un acrylate d'alkyle A1 avec 1 à 8 atomes de carbone dans le résidu alkyle,
A2 : 0,1 à 5% en poids d'au moins un monomère polyfonctionnel A2 à action réticulante,
et
A3 : jusqu'à 50% en poids d'au moins un monomère A3 monoéthyléniquement insaturé,
comme base de greffage
B : 5 à 40% en poids d'une enveloppe B greffée sur le polymère élastomère A, composée de (par rapport à B) :
B1 : 30 à 90% en poids d'au moins un monomère vinylaromatique B1,
B2 : 5 à 40% en poids d'au moins un monomère B2 éthyléniquement insaturé, polaire et copolymérisable
et
B3 : 5 à 30% en poids d'au moins un acrylate d'alkyle B3 avec 7 à 20 atomes de carbone dans le résidu alkyle
et
C : 30 à 94% en poids d'un copolymère C, composé de
C1 : au moins un monomère vinylaromatique C1
et
C2 : au moins un monomère C2 éthyléniquement insaturé, polaire et copolymérisable.

2. Masse à mouler thermoplastique selon la Revendication 1, dont l'enveloppe greffée B est constituée de
45 à 80% en poids du monomère B1,
10 à 30% en poids du monomère B2
et
10 à 25% en poids de l'acrylate d'alkyle B3.

3. Masse à mouler thermoplastique selon la Revendication 1, comprenant un acrylate d'alkyle B3 avec 8 à 12 atomes de carbone dans le résidu alkyle.

4. Masse à mouler thermoplastique selon la Revendication 1, comprenant comme monomère C2 de l'acrylonitrile.
